Europäisches Patentamt

European Patent Office

Office européen des brevets

(19)

(11) Veröffentlichungsnummer: **0 156 336 B1**

(12) **EUROPÄISCHE PATENTSCHRIFT**

(45) Veröffentlichungstag der Patentschrift: **29.01.92**

(51) Int. Cl.5: **H04Q 7/04**

(21) Anmeldenummer: **85103449.6**

(22) Anmeldetag: **23.03.85**

(54) **Nachrichtenübertragungssystem.**

(30) Priorität: **24.03.84 DE 3411013**

(43) Veröffentlichungstag der Anmeldung:
**02.10.85 Patentblatt 85/40**

(45) Bekanntmachung des Hinweises auf die
Patenterteilung:
**29.01.92 Patentblatt 92/05**

(84) Benannte Vertragsstaaten:
**AT BE CH DE FR GB IT LI LU NL SE**

(56) Entgegenhaltungen:
FR-A- 2 472 898
FR-A- 2 505 124

**TECHNISCHE RUNDSCHAU, Band 63, Nr. 32,
30. Juli 1971, Seiten 29-34, Winterthur, CH; E.
WEY: "Der mobile Ruf- und Sprechfunk"**

**IEEE GLOBAL TELECOMMUNICATIONS CON-
FERENCE, San Diego, California, 28. November - 1. Dezember 1983, Band 3 of 3, Seiten
1445-1453, IEEE, New York, US; K. KAMMER-
LANDER: "Presentation of the main system
characteristics of the german mobile radio
telephone system C"**

**NACHRICHTEN ELEKTRONIK + TELEMATIK,**

**Band 38, Nr. 7, Juli 1984, Seiten 264-268,
Heidelberg, DE; M. BÖHM: "Mit Digitaltechnik
zum Mobiltelefon für alle"**

(73) Patentinhaber: **Standard Elektrik Lorenz Aktiengesellschaft
Lorenzstrasse 10
W-7000 Stuttgart 40(DE)**

(72) Erfinder: **Burian, Theodor
Schillerstrasse 42
W-7252 Weil der Stadt(DE)**
Erfinder: **Siegel, Herbert
Starenweg 1
W-7251 Ditzingen 5(DE)**

(74) Vertreter: **Graf, Georg Hugo, Dipl.-Ing. et al
Standard Elektrik Lorenz AG Patent- und Lizenzwesen Postfach 30 09 29
W-7000 Stuttgart 30(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 156 336 B1

**Beschreibung**

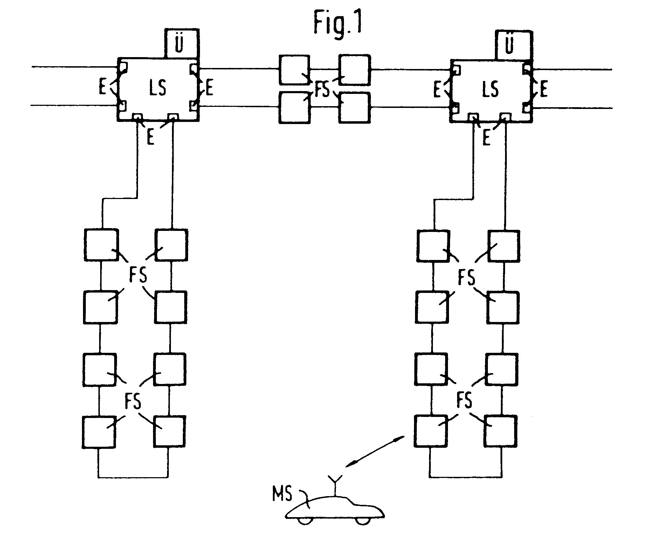

Die Erfindung bezieht sich auf ein Nachrichtenübertragungssystem nach dem Oberbegriff des Anspruchs 1. Aus dem Artikel von K. Kammerlander "Presentation of the Main System Characteristics of the German Mobile Radio Telephone System C" IEEE Global Telecommunications Conference, San Diego, California, 28. November bis 1. Dezember 1983, Band 3 of 3, Seiten 1445 bis 1453, IEEE, New York, USA, ist ein mobiles Telefonsystem mit seinen wesentlichen Merkmalen bekannt. Insbesondere Fig. 1 auf Seite 1451 zeigt eine Anordnung, bei der ein öffentliches Netz (PSTN) mit mehreren Vermittlungsstellen MSC verbunden ist. (MSC = Mobile Service Switching Center). An diese Vermittlungsstellen MSC sind Basisstationen BS angeschlossen. Der Verkehr zu den Mobilstationen MS erfolgt über die Basisstationen BS. Die drei in Fig. 1 gezeichneten Vermittlungsstellen MSC sind über analoge und digitale Datenkanäle miteinander verbunden. Die beschriebene Anordnung hat den Nachteil, daß die Verbindungen zwischen den Vermittlungsstellen MSC nicht optimal genutzt werden.

Aufgabe der Erfindung ist es daher, ein Nachrichtenübertragungssystem zu schaffen, bei dem die zwischen den Vermittlungsstellen bestehenden Verbindungen optimaler genutzt werden.

Diese Aufgabe wird gelöst durch ein Nachrichtenübertragungssystem mit der Merkmalskombination des Hauptanspruches. Vorteilhafte Weiterbildungen und weitere Ausgestaltungen sind in den Unteransprüchen enthalten.

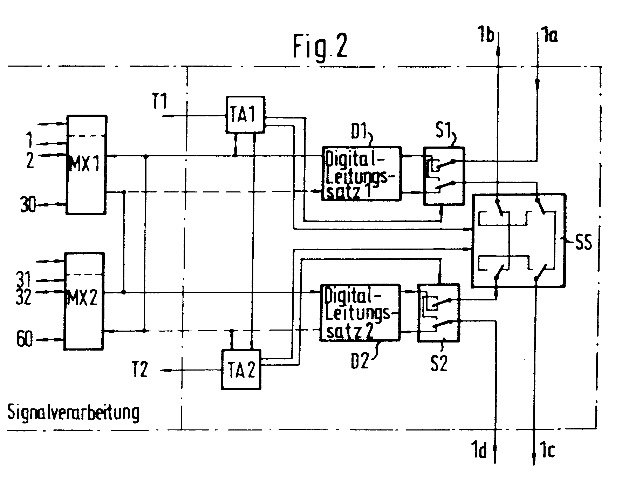

Das Nachrichtenübertragungssystem gemäß der Erfindung hat den Vorteil, daß durch Feststationen, die in die Verbindungswege zwischen den einzelnen Leitstellen eingefügt sind, eine hohe Flexibilität und eine optimale Nutzung der vorhandenen Kanäle erreicht wird. Ein Ausführungsbeispiel der Erfindung wird anhand der Figuren 1 und 2 näher erläutert. Es zeigen:

Fig. 1     schematisch die Struktur des Nachrichtenübertragungssystems

Fig. 2     ein Blockschaltbild eines Teiles einer Feststation.

Der in Fig. 1 dargestellte Ausschnitt aus dem neuen Nachrichtenübertragungssystem enthält zwei Leitstellen LS, die mit je einer Überleiteinrichtung Ü zu einem Fernsprechnetz versehen sind. Die Leitstellen LS sind durch zwei Übertragungswege, Verbindungsleitungen genannt, verbunden. Ferner ist an jede Leitstelle LS je ein ringförmig verlaufender Übertragungsweg, Ringleitung genannt, angeschlossen. Diese Übertragungswege sind durch optische Nachrichtenkabel realisiert. Es können auch andere Übertragungsmedien, beispielsweise Richtfunkstrecken oder Kabel verwendet werden.

Auf jedem Übertragungsweg sind nacheinander mehrere Feststationen FS angeordnet. Sie können über Funk mit einer oder mehreren Mobilstationen MS verkehren. Der Funkverkehr wird auf die in der DE-OS 31 18 018 beschriebenen Weise durchgeführt.

Auf jedem Übertragungsweg wird getrennt für jede Übertragungsrichtung je ein PCM 30 System eingesetzt. Dieses System ist aus der Zeitschrift Elektrisches Nachrichtenwesen, Band 48 Nr. 1 und 2, 1973 S. 72 - 83 bekannt. Es enthält 32 Zeitmultiplexkanäle, von denen 30 zur Übertragung von Nachrichtensignalen vorgesehen und die beiden restlichen Kanäle Steuerkanäle sind.

Jede Leitstelle LS besitzt mehrere Einrichtungen E, an die jeweils ein Ende eines Übertragungsweges angeschlossen ist. Jede Feststation FS ist einer Leitstelle LS zugeordnet. Die Übertragung der Nachrichten und Steuersignale von und zu einer bestimmten Feststation FS erfolgt über ein und dieselbe Einrichtung E der zuständigen Leitstelle LS, unabhängig davon, ob die Feststation FS im Zuge einer Verbindungs- oder Ringleitung angeordnet ist. Unter der Annahme, daß sich der Nachrichtenverkehr auf alle Feststationen FS der Ringleitungen gleichmäßig verteilt, sind daher in Fig. 1 die auf dem rechten Teil der Ringleitungen angeordneten vier Feststationen FS einer ersten Einrichtung E in der zuständigen Leitstelle LS und die restlichen vier Feststationen FS einer anderen Einrichtung E derselben Leitstelle LS zugeordnet. Da jede Feststation FS von allen auf allen Kanälen der PCM 30-Systeme übertragenen Signalen nur die für sie bestimmten Signale ausliest und verarbeitet, und alle anderen Signale an die benachbarte Feststation FS weiterleitet, ist auch eine andere Zuordnung möglich. Außerdem können dadurch auf jedem Übertragungsweg die vorhandenen Zeitmultiplexkanäle wie folgt doppelt ausgenutzt werden.

Das eine PCM 30-System eines Übertragungsweges überträgt auf dem rechten Teil der Ringleitung die von der ersten Einrichtung E für die dort angeordneten vier Feststationen FS bestimmten Signale. Auf dem linken Teil sind dieselben Kanäle mit den von den dortigen Feststationen zur anderen Einrichtung E derselben Leitstelle LS zu übertragenden Signale belegt. Das andere PCM 30-System arbeitet entsprechend in der anderen Übertragungsrichtung.

Analoges gilt auch auf den Verbindungsleitungen. Allerdings gehören dort die beiden Einrichtungen E an den Enden der Verbindungsleitungen zu zwei verschiedenen Leitstellen LS. Außerdem besteht hier die Möglichkeit und Notwendigkeit, Signale direkt von der einen Leitstelle LS zur anderen zu übertragen, z. B. dann, wenn eine Mobilstation MS aus dem Bereich einer Leitstelle in den Bereich einer anderen Leitstelle gelangt. Die von solchen Signalen belegten Zeitmultiplexkanäle werden nur einfach ausgenutzt. Zur Vereinfachung der Kanalverteilung auf den Verbindungsleitungen werden die doppelt nutzbaren Kanäle, also die für die Nachrichtenübertragung zwischen einer Feststation FS und deren zuständigen Leitstelle LS, kleine Kanalnummern, d. h. die Kanalnummer 1 bis i, beginnend mit Kanalnummer 1, und für die einfach nutzbaren Kanäle große Kanalnummern i + 1 bis k, beginnend mit Kanalnummer k zugeteilt. So sind beispielsweise zu einem bestimmten Zeitpunkt die Kanäle 1 bis 5 doppelt ausgenutzt, die Kanäle 6 - 10 dienen der Nachrichtenübertragung zwischen der einen Leitstelle LS und einer oder mehrerer ihr zugeordneter Feststationen FS, die Kanäle 11 - 23 sind frei, und die Kanäle 24 - 30 sind mit dem direkten Nachrichtenverkehr zwischen den beiden Leitstellen LS belegt.

Bei einer Störung auf einem Übertragungsweg ändert sich die Zuordnung der Feststationen FS zu den Leitstellen LS so, daß jede Feststation FS über den ungestörten Teil des Übertragungsweges mit einer Leitstelle LS verbunden ist. Dazu sind in jeder Leitstelle LS Mittel vorhanden, den Ort der Störung festzustellen und über einen der beiden Steuerkanäle in den der Störungsstelle benachbarten Feststationen je einen Schalter SS (Fig. 2) zu betätigen, der den Übertragungsweg unterbricht, und auf beiden Seiten der Unterbrechung jeweils die Enden der Leitungen 1a bis 1d (Fig. 2) miteinander verbindet, und zwar 1a mit 1b und 1c mit 1d.

Fig. 2    zeigt ein Blockschaltbild eines Teils einer Feststation, aus dem hervorgeht, wie die Feststation an den Übertragungsweg angeschlossen ist. Dieser ist durch die zwei Leitungen 1a,c und 1d,b angedeutet. Die Leitungen sind mit PCM 30-Systemen ausgerüstet.

Im Zuge der Leitung 1a,c befindet sich ein Schalter S1, ein Digitalleitungssatz D1 und der Schalter SS, im Zuge der Leitungen 1d,b befindet sich ein Schalter S2, ein Digitalleitungssatz D2 und der Schalter SS.

Der Digitalleitungssatz D1 ist mit einer ersten Takt/Alarmschaltung TA1 und zwei Multiplexern/Demultiplexern, Muldexer genannt, MX1 und MX2 verbunden. Der Digitalleitungssatz D2 ist mit einer zweiten Takt/Alarmschaltung TA2 und den Muldexern MX1 und MX2 verbunden. Die Takt/Alarmschaltung TA1 ist mit den Schaltern S1 und SS, die Takt/Alarmschaltung TA2 ist mit den Schaltern S2 und SS und beide Takt/Alarmschaltungen miteinander verbunden.

Bei störungsfreiem Betrieb des Nachrichtenübertragungssystems nehmen die Schalter S1, S2 und SS die in Fig. 2 gezeichnete Stellung ein. Der Digitalleitungssatz D1 liest aus den bei 1a ankommenden Signalen die für ihn bestimmten Signale aus und leitet sie über die Muldexer MX1 oder MX2 und weitere nicht gezeichnete Bauteile an die Mobilstationen weiter.

Die anderen Signale gelangen über 1c an die nächste Feststation. In der umgekehrten Richtung werden die von den Mobilstationen stammenden Signale über die Muldexer MX1 oder MX2 und den Digitalleitungssatz 2 in die Leitung 1b eingespeist.

Bei einem Ausfall des Digitalleitungssatzes D1 veranlaßt die Takt/Alarmschaltung TA1 durch Umschalten des Schalters S1 die Trennung des Digitalleitungssatzes D1 von der Leitung 1a, c, und setzt über die Takt/Alarmschaltung TA2 und den Digitalleitungssatz D2 auf dem Steuerkanal eine entsprechende Meldung an die zuständige Leitstelle ab. Diese veranlaßt , wie oben beschrieben, die Umschaltung des Schalters SS und ordnet die Feststation, und sofern erforderlich, die benachbarten Feststationen der anderen Leitstelle, oder, bei Ringleitungen, der anderen Einrichtung E am anderen Ende der Ringleitung zu. Der Digitalleitungssatz D2 überträgt nun in beiden Richtungen für diese Feststation bestimmten Nachrichten und Steuersignale.

Die beiden Steuerkanäle jedes PCM 30-Systems dienen der Taktversorgung der Feststationen FS und der Übertragung aller benötigten Steuersignale. Dazu gehören insbesondere Signale zur Verteilung der Zeitmultiplexkanäle auf die Mobilstationen MS, zum Auf- und Abbau der Nachrichtenverbindung zwischen einer Mobilstation MS und einer Leitstelle LS, zum Weiterreichen der Mobilstation von einer Feststation zur benachbarten Feststation ohne Unterbrechung der Nachrichtenverbindung, zur Übertragung von Besetztzeichen etc. und zur Steuerung des Nachrichtenübertragungssystems im Normal- und Störungsfall.

Die Takt/Alarmeinheiten TA1 und TA2 nehmen außer der Überwachung des jeweilig zugeordneten Digitalleitungssatzes D1 oder D2 und der Verarbeitung von Alarmsignalen weitere Funktionen wahr, insbesondere die Taktsynchronisation oder die Taktversorgung der Feststation

**Patentansprüche**

1.  Nachrichtenübertragungssystem mit Feststationen (FS) und mit Mobilstationen (MS), die über Funk mit den Feststationen (FS) Nachrichten austauschen können, wobei mehrere Feststationen (FS) von einer Leitstelle (LS) gesteuert werden, bei dem alle oder ein Teil der Leitstellen (LS) räumlich mit einer Überleiteinrichtung (Ü) zu einem Fernsprechwählnetz vereinigt sind, und bei dem die Leitstellen (LS) über Übertragungswege miteinander verbunden sind,
    **dadurch gekennzeichnet,** daß sich in den Übertragungswegen, die zwei Leitstellen (LS) miteinander verbinden, Feststationen (FS) befinden.

2. Nachrichtenübertragungssystem nach Anspruch 1, dadurch gekennzeichnet, daß auf den Übertragungswegen für jede Übertragungsrichtung getrennt für die Nachrichtensignale k Zeitmultiplexkanäle und für die Steuersignale des Nachrichtenübertragungssystems weitere 1 Zeitmultiplexkanäle vorgesehen sind.

3. Nachrichtenübertragungssystem nach Anspruch 1 oder 2, dadurch gekennzeichnet, daß jede Feststation (FS) von den auf allen Zeitmultiplexkanälen beider Übertragungsrichtungen übertragenen Nachrichten- und Steuersignalen, die nicht für sie bestimmten Signale erkennt und unter Beibehaltung der Übertragungsrichtung auf den Übertragungswegen an die benachbarte Feststation weiterleitet und die für sie bestimmten Signale verarbeitet.

4. Nachrichtenübertragungssystem nach einem der vorangehenden Ansprüche, dadurch gekennzeichnet, daß auf den Übertragungswegen zwischen zwei Leitstellen (LS) die eine Leitstelle den Nachrichtenverkehr von und zu einer Anzahl aufeinanderfolgender Feststationen (FS), beginnend mit der ihr nächstliegenden Feststation, und die andere Leitstelle den Nachrichtenverkehr von und zu den restlichen Feststationen steuert.

5. Nachrichtenübertragungssystem nach Anspruch 4, dadurch gekennzeichnet, daß für den Nachrichtenverkehr zwischen der einen Leitstelle (LS) und den von ihr gesteuerten Feststationen (FS), sowie zwischen der anderen Leitstelle und den von dieser gesteuerten Feststationen, die Belegung der k Kanäle bei der Kanalnummer 1 und für den direkten Nachrichtenverkehr zwischen zwei Leitstellen bei der Kanalnummer k beginnt, und weitere Kanäle in nacheinander fortlaufender Reihenfolge belegt werden.

6. Nachrichtenübertragungssystem nach einem der vorangehenden Ansprüche, dadurch gekennzeichnet, daß bei Bedarf einzelne Zeitmultiplexkanäle für bevorzugt zu übertragende Nachrichten reserviert oder freigemacht werden.

7. Nachrichtenübertragungssystem nach einem der vorhergehenden Ansprüche, dadurch gekennzeichnet, daß die Leitstellen (LS) Störungen auf den Übertragungswegen erkennen, orten und die Unterbrechung des gestörten Übertragungsweges in den der Störungsstelle benachbarten Feststationen veranlassen, und daß die Steuerung der Feststationen und der Nachrichtenverkehr von und zu den Feststationen über den jeweils nicht gestörten Teil des Übertragungsweges erfolgt.

8. Nachrichtenübertragungssystem nach einem der vorangehenden Ansprüche, dadurch gekennzeichnet, daß bei Auftreten einer Störung innerhalb einer Feststation, diese Feststation ein Signal an eine Leitstelle sendet, worauf die Leitstelle erforderlichenfalls veranlaßt, daß ein Teil oder alle anderen auf demselben Übertragungsweg wie die gestörte Feststation angeordneten Feststationen entweder vom anderen Ende des Übertragungsweges oder von einer anderen Leitstelle als vor der Störung aus gesteuert werden.

**Claims**

1. Communication system comprising base stations (FS) and mobile stations (MS) capable of communicating with the base stations (FS) by radio, wherein groups of two or more of said base stations (FS) are controlled by a control station (LS), wherein all or part of the control stations (LS) are colocated with an interface facility (Ü) providing the connection to an automatic telephone system, and wherein the control stations (LS) are interconnected by transmission paths,
**characterized in** that the transmission paths interconnecting two control stations (LS) contain base stations (FS).

2. A communication system as claimed in claim 1, characterized in that on the transmission paths, separately for each direction of transmission, k time-division multiplex channels are provided for the intelligence signals and l time-division multiplex channels are provided for the control signals of the communication system.

3. A communication system as claimed in claim 1 or 2, characterized in that each base station (FS) recognizes those of the intelligence and control signals transmitted on all time-division multiplex channels in both directions which are not intended for it, passes them on in the same direction of transmission to the neighboring base station, and processes the signals intended for it.

4. A communication system as claimed in any one of the preceding claims, characterized in

EP 0 156 336 B1

4

that on the transmission paths between two control station (LS), one control stations controls communications from and to a number of successive base stations (FS) beginning with the base station located nearest it, while the other control station controls communications from and to the other base stations.

5. A communication systems as claimed in claim 4, characterized in that for communication between said one control station (LS) and the base stations (FS) controlled by said one control station and between said other control station and the base stations controlled by said other control stations, the seizure of the k channels begins at channel no. 1, that for direct communication between two control stations, the seizure of the k channels begins at channel no. k, and that further channels are seized in a continuous sequence.

6. A communication system as claimed in any one of the preceding claims, characterized in that, if required, individual time-division multiplex channels are reserved or freed for messages to be transmitted with priority.

7. A communication system as claimed in any one of the preceding claims, characterized in that the control stations (LS) detect and locate faults in the transmission paths and cause the faulty transmission path to be opened at the base stations adjacent to the fault, and that the base stations and communications from and to the base stations are controlled via the properly operating portion of the respective transmission path.

8. A communication system as claimed in any one of the preceding claims, characterized in that on the occurrence of a fault within a base station, said base station sends a signal to a control station, whereupon the control station, if necessary, causes a part or all of the other base stations contained in the same transmission path as the faulty base station to be controlled either from the other end of the transmission path or from a control station other than that which controlled them prior to the occurrence of the fault.

**Revendications**

1. Système de transmission d'informations ayant des stations fixes (FS) et des stations mobiles (MS) qui sont susceptibles d'échanger des informations avec les stations fixes (FS) au moyen d'une liaison radioélectrique, dans lequel plusieurs stations fixes (FS) sont commandées par une station de commande (LS) et dans lequel toutes ou une partie des stations de commande (LS) sont reliées par un dispositif de transfert (Ü) à un réseau public commuté, et dans lequel les stations de commande (LS) sont raccordées ensemble via des chemins de transmission, caractérisé en ce que des stations fixes (FS) se trouvent sur les chemins de transmission qui raccordent deux stations de commande (LS) l'une à l'autre.

2. Système de transmission d'informations selon la revendication 1, caractérisé en ce qu'il comporte, sur les chemins de transmission, pour chaque sens de transmission séparément, k canaux multiplex temporels pour les signaux d'information et 1 canaux multiplex temporels supplémentaires pour les signaux de commande du système de transmission d'information.

3. Système de transmission d'informations selon l'une des revendications 1 ou 2, caractérisé en ce que chaque station fixe (FS) reconnaît les signaux d'information et de commande transmis sur tous les canaux temporels des deux sens de transmission, qui ne lui sont pas destinés, et les achemine vers la station fixe avoisinante tout en respectant le sens de transmission sur les chemins de transmission, et réalise le traitement des signaux qui lui sont destinés.

4. Système de transmission d'informations selon l'une quelconque des revendications précédentes, caractérisé en ce que sur les chemins de transmission entre deux stations de commande (LS), l'une de ces stations commande le trafic d'information en provenance et en direction d'une pluralité de stations fixes (FS) consécutives, commençant par la station fixe qui est la plus proche d'elle, et l'autre de ces stations commande le trafic d'information en provenance et en direction des stations fixes restantes.

5. Système de transmission d'informations selon la revendication 4, caractérisé en ce que pour le trafic d'information entre l'une des stations de commande (LS) et les stations fixes (FS) qu'elle commande, ainsi qu'entre l'autre station de commande et les stations fixes qu'elle commande, l'occupation des k canaux temporels commence par le canal numéro 1, et pour le trafic direct d'information entre deux stations de commande, commence par le canal numéro k, les canaux suivants étant occupés de façon progressive, successivement et sans interruption.

6. Système de transmission d'informations selon l'une quelconque des revendications précédentes, caractérisé en ce qu'en cas de besoin, des canaux temporels individuels sont réservés ou libérés pour des informations qui sont à transmettre préférentiellement.

7. Système de transmission d'informations selon l'une quelconque des revendications précédentes, caractérisé en ce que les stations de commande (LS) reconnaissent et localisent des perturbations sur les chemins de transmission et réalisent la coupure des chemins de transmission perturbés dans les stations fixes avoisinantes à la position de la perturbation, et en ce que la commande des stations fixes et du trafic d'information en provenance et en direction des stations fixes se poursuit sur la partie respective du chemin de transmission qui n'est pas perturbée.

8. Système de transmission d'informations selon l'une quelconque des revendications précédentes, caractérisé en ce qu'à l'apparition d'une perturbation à l'intérieur d'une station fixe, cette station fixe envoie un signal vers une station de commande, en réponse auquel cette station de commande, si nécessaire, fait en sorte qu'une partie ou toutes les autres stations fixes disposées sur le même chemin de transmission que celui de la station fixe perturbée soient commandées soit à partir de l'autre extrémité du chemin de transmission, soit à partir d'une station de commande qui n'est pas la même qu'avant la perturbation.

Fig.1

Fig.2